# EUROPEAN PATENT SPECIFICATION

(11) **EP 1 577 171 B1**
(45) Date of publication and mention of the grant of the patent: **14.11.2012**
(21) Application number: 05090061.2
(22) Date of filing: 10.03.2005
(51) Int. Cl.: B60R 21/231

(54) **Airbag device**
Airbagvorrichtung
Dispositif d'airbag

(30) Priority: 17.03.2004 DE 102004013364; 12.11.2004 US 627025 P; 15.11.2004 US 627178 P; 18.11.2004 US 628539 P; 25.01.2005 US 646487 P; 15.02.2005 US 652731 P
(43) Date of publication of application: 21.09.2005
(73) Proprietor: Takata AG, 63743 Aschaffenburg (DE)
(72) Inventor: Sievers, Thomas, 89081 Ulm (DE)
(74) Representative: Baumgärtel, Gunnar

(56) References cited:
- DE-A1- 4 226 954
- US-A1- 2001 040 368
- US-A1- 2003 116 951

## Description

### BACKGROUND

The present invention relates to an airbag of an occupant protection device.

As is generally known in the art, an airbag for protecting the head of a vehicle occupant is installed adjacent to a corner of a vehicle interior where a roof panel and a side panel are joined to each other, and is constructed so as to be deployed along a side door window and the like when gas is introduced therein from an inflator through a gas inlet.

International Publication No. WO 97/06987 discloses a side airbag which is deployed on the side of a vehicle occupant. In the side airbag, a longitudinal intermediate portion of a bag is constricted by a seam which extends in a transverse direction (a lengthwise direction of a vehicle body: this also applies to the following description), so that the bag is divided into an upper portion and a lower portion. A panel is positioned along a portion of the airbag which faces the vehicle occupant. The upper and lower portions of the panel are respectively connected to the upper and lower portions of the bag. When the bag is inflated, the panel is tightly stretched. Then, as the shoulder of the occupant comes into contact with the bag, the panel pulls the upper portion of the bag downward. As such, the upper portion of the bag is pulled toward the vehicle occupant to protect the head of the vehicle occupant.

Japanese Unexamined Patent Application Publication No. 2003-72500 discloses an airbag for protecting the head of a vehicle occupant. In this type of airbag, supporting fabric is positioned on the sides of a bag which faces both a vehicle occupant and a vehicle body. The upper and lower edges of the supporting fabric are coupled to the upper and lower edges of the bag.

In the case where the airbag disclosed in International Publication No. WO 97/06987, which has the panel positioned so as to face the vehicle occupant, is employed as a head protection airbag, when the head of the vehicle occupant comes into contact with the panel, since the lower portion of the bag is also pulled toward the vehicle occupant, a tensile force is not sufficiently generated in the panel, and therefore, the panel cannot properly protect the head.

In the case of the head protection airbag disclosed in Japanese Unexamined Patent Application Publication No. 2003-72500, the supporting fabric contributes to the protection of the occupant's head. However, in order to ensure that the airbag or the supporting fabric immediately catches the head of the vehicle occupant, the thickness of a connection member of the airbag needs to be increased, which consequently increases the size of the airbag. As a result, it is necessary to employ an inflator having a large capacity.

Further, DE 42 26 954 A1, which is considered as representing the closest prior art, discloses an airbag according to the preamble of claim 1 with a fabric hollow body comprising an upper fabric layer and a lower fabric layer, wherein two fabric gusset layers are arranged between the upper and the lower fabric layer.

There is a general need to maximize the effective thickness (inflated thickness) of airbags. At the same time, this need to maximize the effective thickness is limited by the performance of the gas generators that are used to fill the airbags.

The increase in airbag chamber thickness is currently achieved by increasing the pertinent orthogonal dimensions of the airbag. This, however, increases the volume by around the power of three in relation to the chamber thickness (this means, for instance, a volume increase of 3.4 with an increase in chamber of thickness of 1.5). When scaling the airbag cutting or airbag panel shape to the required size, all three dimensions are stretched to the same extent.

### SUMMARY

The invention relates to an airbag comprising a front fabric panel connected to a rear fabric panel to form a chamber therebetween and a gusset positioned to allow the front and rear panels to separate at a point where the front and rear panels are connected by the gusset, wherein the airbag further comprises two airbag panels, hereinafter referred to as second and third airbag panel, the second and third airbag panels forming said gusset;
- wherein the front airbag panel is connected to the second airbag panel along a first seam;
- wherein the third airbag panel is connected to the rear airbag panel along a second seam;
- wherein the second airbag panel is connected to the third airbag panel along a third seam, the third seam being farther from the periphery of the second and third airbag panels than the first and second seams;
- wherein the second and third airbag panels each have a cutting area or opening; and
- wherein said first, second and third seams and said openings join the front, second, third and rear airbag panels together and create a chamber inside the panels.

According to an embodiment of the present invention, an occupant safety system is provided. The occupant safety system comprises an airbag with front and rear panels connected to form a chamber therebetween and a gusset configured to allow the front and rear panels to separate at a point where the gusset is connected to the front and rear panels and an inflator for inflating the airbag.

It is to be understood that both the foregoing general description and the following detailed description are exemplary and explanatory only, and are not restrictive of the invention as claimed.

### BRIEF DESCRIPTION OF THE DRAWINGS

These and other features, aspects, and advantages of the present invention will become apparent from the following description, appended claims, and the accompanying exemplary embodiments shown in the drawings, which are briefly described below.
Figures 1(a) and 1(b) are views of an airbag according to an embodiment of the present invention. Figure 1(a) is an exploded view of the airbag and Figure 1(b) is a perspective view of the airbag of Figure 1(a).
Figures 2(a) and 2(b) are views of an airbag according to another embodiment of the present invention. Figure 2(a) is an exploded view of the airbag and Figure 2(b) is a perspective view of the airbag of Figure 2(a).
Figures 3(a), 3(b) and 3(c) are views of an airbag according to another example which is not part of the present invention. Figure 3(a) is an exploded view of the airbag. Figure 3(b) is a top perspective view of the airbag of Figure 3(a) and Figure 3(c) is a side perspective view of the airbag of Figure 3(a).
Figures 4(a), 4(b) and 4(c) are views of an airbag according to another example which is not part of the present invention. Figure 4(a) is an exploded view of the airbag. Figure 4(b) is a perspective view of the airbag of Figure 4(a) and Figure 4(c) is a bottom view of the airbag of Figure 4(a).
Figures 5(a), 5(b) and 5(c) are views of an airbag according to another example which is not part of the present invention. Figure 5(a) is an exploded view of the airbag. Figure 5(b) is a top perspective view of the airbag of Figure 5(a) and Figure 5(c) is an end view of the airbag of Figure 5(a).
Figure 6 is an exploded view of an airbag of another example which is not part of the present invention.
Figures 7(a) and 7(b) are views of an airbag according to another example which is not part of the present invention. Figure 7(a) is a view of the airbag prior to inflation. Figure 7(b) is a view of the airbag after inflation.
Figure 8 is a side view of an airbag with multiple gussets according to another embodiment of the present invention.
Figure 9 is a perspective view of an airbag showing the height and volume of portions of the airbag.

### DETAILED DESCRIPTION

Hereinafter, embodiments of the present invention will be described with reference to the attached drawings.

According to an embodiment of the invention, an airbag arrangement is provided that permits the production of an airbag with a larger effective thickness, while increasing the airbag volume only approximately proportional to the thickness increase in respective airbag areas. The arrangement may be achieved by a particular fabric blank or panel and sewing arrangement.

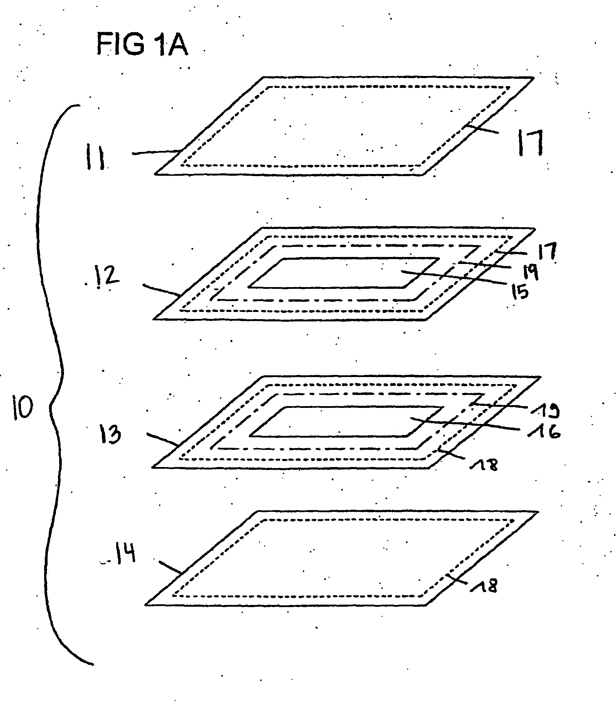

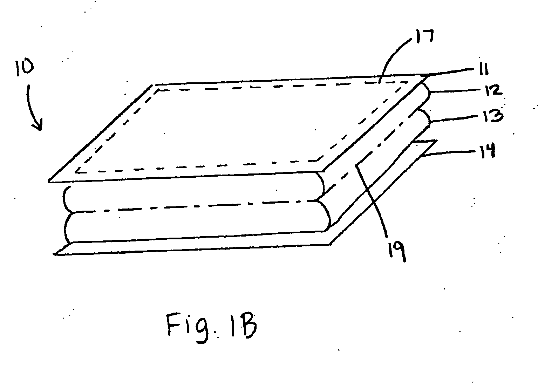

Figures 1(a) and 1(b) show an airbag 10 according to an embodiment of the present invention. The airbag 10 includes a first airbag panel 11, a second airbag panel 12, a third airbag panel 13 and a fourth airbag panel 14. The first airbag panel 11 is connected to the second airbag panel 12 along a first sewn seam line 17. The first seam line 17 follows along the periphery of the first 11 and second 12 airbag panels. The fourth airbag panel 14 is connected to the third airbag panel 13 along a second seam line 18. The second seam line 18 follows along the periphery of the third 13 and fourth 14 airbag panels. The second 12 and third 13 airbag panels are joined together along a third seam line 19. This third seam line 19 is follows the periphery of the second 12 and third 13 airbag panels, but is farther from the edges than the first 17 or second 18 lines.

The second airbag panel 12 includes a first cutting area or opening 15 in the center of the second airbag panel 12. The third airbag panel 13 also includes a cutting area or opening 16 in the center of the third airbag panel 13. The seams lines 17, 18, 19 and the openings 15, 16 join the first 11, second 12, third 13 and fourth 14 airbag panels together and create a chamber inside the panels 11, 12, 13, 14. The second 12 and third 13 airbag panels form a gusset for the airbag 10, expanding the volume of the airbag 10.

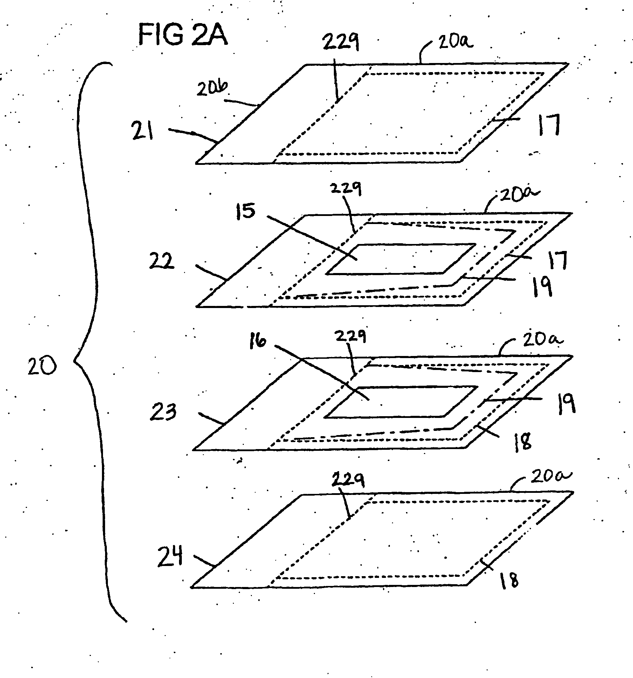

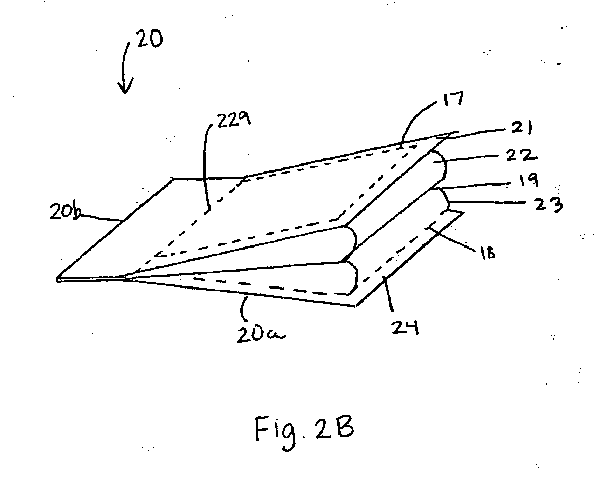

Figures 2(a) and 2(b) show another embodiment of the present invention. An airbag 20 includes a first airbag panel 21, a second airbag panel 22, a third airbag panel 23 and a fourth airbag panel 24. The first airbag panel 21 is connected to the second airbag panel 22 along a first seam 17. The first seam 17 extends around the periphery of the first 21 and second 22 airbag panels except that the first seam 17 does not extend along the entire side 20a of the first 21 and second 22 panels. Rather the first seam 17 does not extend to meet the second end 20b of the first 21 or second 22 airbag panels. The position along the side 20a of the first 21 and second 22 airbag panels that the first seam 17 extends can vary.

The third airbag panel 23 is connected to the fourth airbag panel 24 along a second seam 18. This seam 18 is similar to the first seam 17 in that it extends around the periphery of the panels 23, 24, but does not extend to meet the second end 20b of the third 23 or fourth 24 airbag panels.

The second airbag panel 22 is connected to the third airbag panel 23 along a third seam 19. This seam line 19 is similar to first 17 and second 18 seam lines, except that it is farther from the periphery of the second 22 and third 23 airbag panels. The second 22 and third 23 airbag panels each have a cutting area or opening 15, 16.

A fourth seam line 229 joins together the first 21, second 22, third 23 and fourth 24 airbag panels. This fourth seam line 229 extends along the width of the airbag 20. The seams lines 17, 18, 19 and the openings 15, 16 join the first 21, second 22, third 23 and fourth 24 airbag panels together and create a chamber inside the panels 21, 22, 23, 24. The second 22 and third 13 airbag panels form a gusset for the airbag 20, expanding the volume of the airbag 20. On one side (right in Figures 2(a) and 2(b)), the airbag 20 is capable of expanding. On the other side (left side), the airbag 20 does not expand due to the fourth seam line 229 joining the first 21, second 22, third 23 and fourth 24 airbag panels.

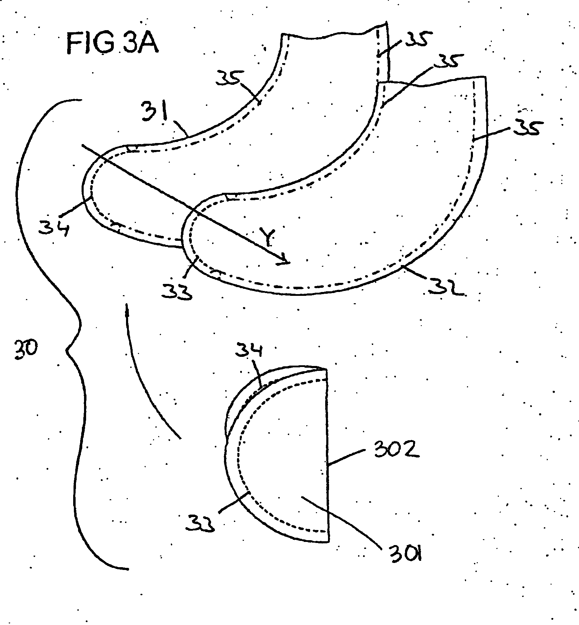

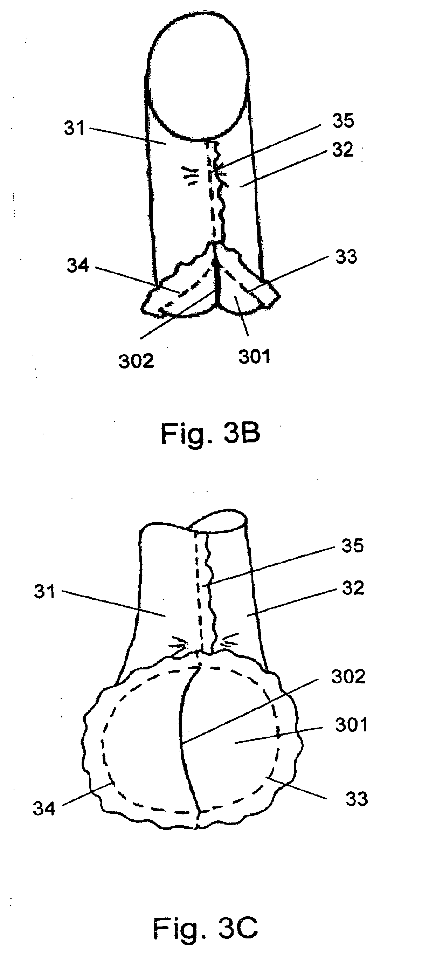

Figures 3(a) - 3(c) show an exemplary airbag 30 which is not part of the invention. Airbag 30 includes a first airbag panel 31, a second airbag panel 32 and a folded panel 301.

The first airbag panel 31 is connected to the second airbag panel 32 along a seam 35. The seam 35 does not continue along the entire circumference of the first 31 and second 32 airbag panels, but ends at an end of the first 31 and second 32 airbag panels. At the end of the airbag panels 31 and 32 without seam 35, the folded panel 301 is joined to the panels 31, 32. A portion of the folded panel 301 is connected to the first airbag panel 31 along seam 34. The other portion of the folded panel 301 is connected to the second airbag panel 32 along seam 33. The folded panel 301 is folded or creased along the center of the substantially circular folded panel 301 at a fold 302 and creates a separation between the first 31 and second 32 airbag panels at the connection points. The folded panel 301 acts as a gusset to increase the volume of the airbag 31.

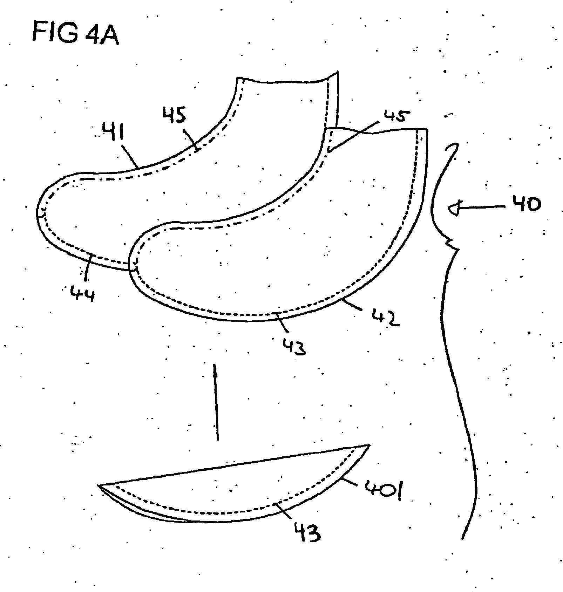

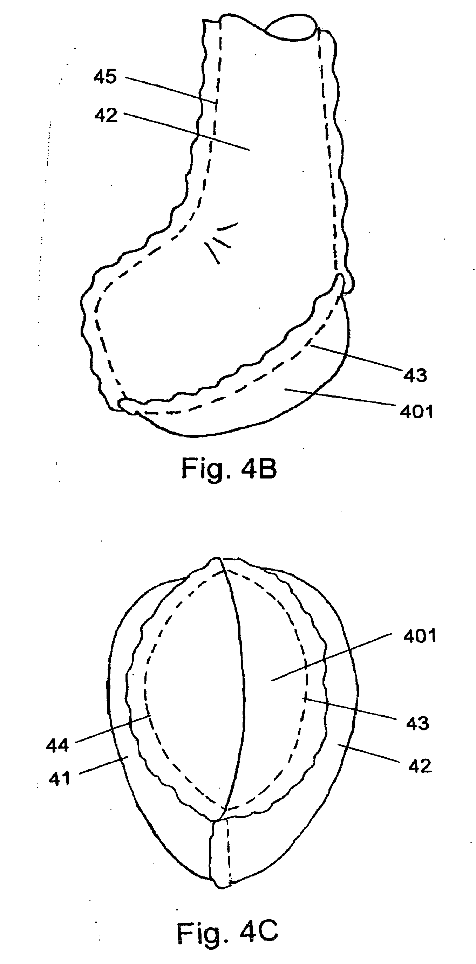

Figures 4(a) - 4(c) show another example of an airbag 40 which is not part of the present invention. The airbag 40 includes a first panel 41, a second panel 42 and a folded panel 401.

The first airbag panel 41 is connected to the second airbag panel 42 along a seam 45. The seam 45 does not continue along the entire circumference of the first 41 and second 42 airbag panels, but ends at an end of the first 41 and second 42 airbag panels. At the end of the airbag panels 41 and 42 without seam 45, the folded panel 401 is joined. A portion of the folded panel 401 is connected to the first airbag panel 41 along seam 44. The other portion of the folded panel 401 is connected to the second airbag panel 42 along seam 43. The folded panel 401 is folded or creased along the center of the substantially circular folded panel 401 and creates a separation between the first 41 and second 42 airbag panels at the connection points. Airbag 40 is similar to airbag 30 except that the gusset (folded panel 401) extends along the length of the airbag 40, as opposed to an end of the airbag.

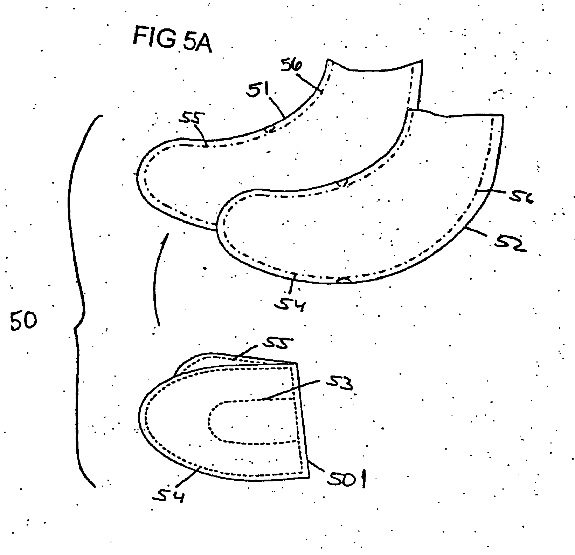

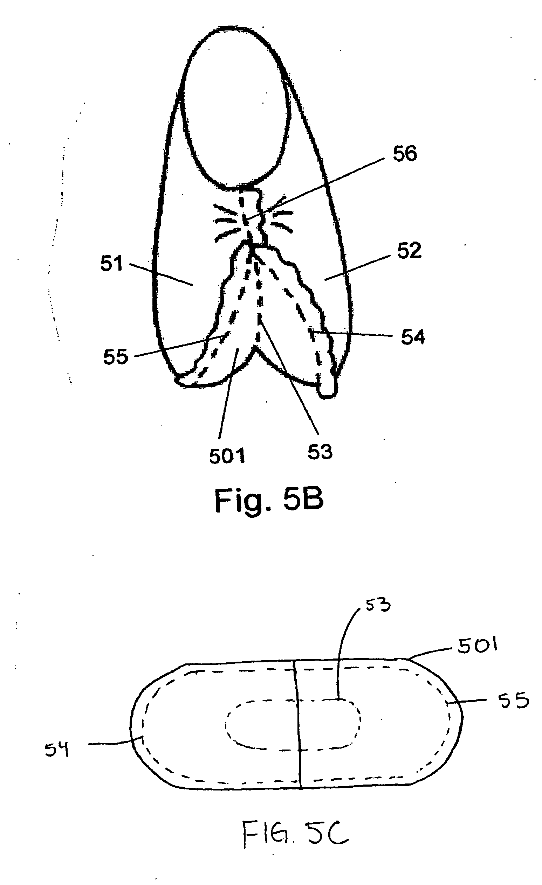

Airbag 50, according to another example which is not part of the present invention, is shown in Figures 5(a) - 5(c). The airbag 50 includes a first 51 and second 52 airbag panel and a folded panel 501. The first 51 and second 52 airbag panels are connected together along seam 56. Seam 56 does not extend along the circumference of the airbag panels 51, 52, but stops at an end of the airbag 50.

Folded panel 501 attaches to the airbag 50 at the end of the airbag 50 without seam 56. Folded panel 501 acts like a gusset for the airbag 50. The first airbag panel 51 attaches to a portion of the folded airbag panel 501 along seam 55. The second airbag panel 52 attaches to a portion of the folded airbag panel 52 along seam 54. An additional seam 53 connects the folded portions of the folded airbag panel 501 together. Airbag 50 is similar to airbag 30 except that the additional seam 53 alters the inflated shape of the airbag 50.

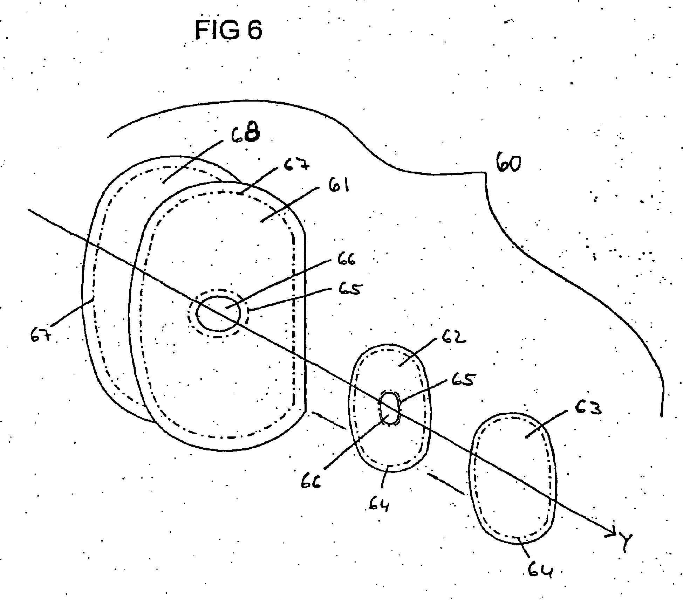

Figure 6 shows an airbag 60 of an additional example which is not part of the present invention. The airbag 60 includes a first airbag panel 68, a second airbag panel 61, a third airbag panel 62 and a fourth airbag panel 63. The second airbag panel 61 includes an opening 66 in approximately the middle of the airbag panel 61. The first 68 and second 61 airbag panels are connected together along seam 67. The third 62 and fourth 63 airbag panels are connected together along seam 64. The third airbag panel 62 also includes an opening 66 in the middle of the airbag panel 62. The third airbag panel 62 is connected to the second airbag panel 61 along seam 65, such that the openings 66 in both the second 61 and third 62 airbag panels align. In this airbag 60, when gas inflates the airbag 60 by entering the chamber between the first 68 and second 61 airbag panels, gas will exit the opening 66 in the second airbag panel 61, pass through the opening 66 in the third airbag panel 62 and enter the chamber between the third 62 and fourth 63 airbag panels.

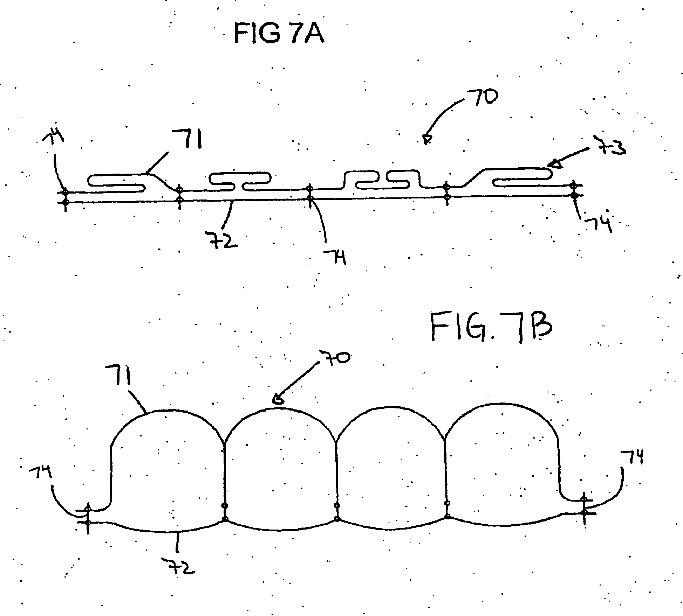

In another example which is not part of the present invention, as shown in Figures 7(a) and 7(b), an airbag 70 is provided. The airbag 70 includes a first airbag panel 71 and a second airbag panel 72. The length of the first airbag panel 71 is greater than the length of the second airbag panel 72. In the uninflated state, shown in Figure 7(a), the first 71 and second 72 panels are stitched together along seams 74, which form chambers in the airbag 70. Because the first airbag panel 71 is longer, the panel 71 includes surplus sections 73 which are additional material. These surplus sections 73 are folded over in the uninflated state. When the airbag 70 is deployed and inflates, the surplus sections 73 create rounded sections, as can be seen in Figure 7(b).

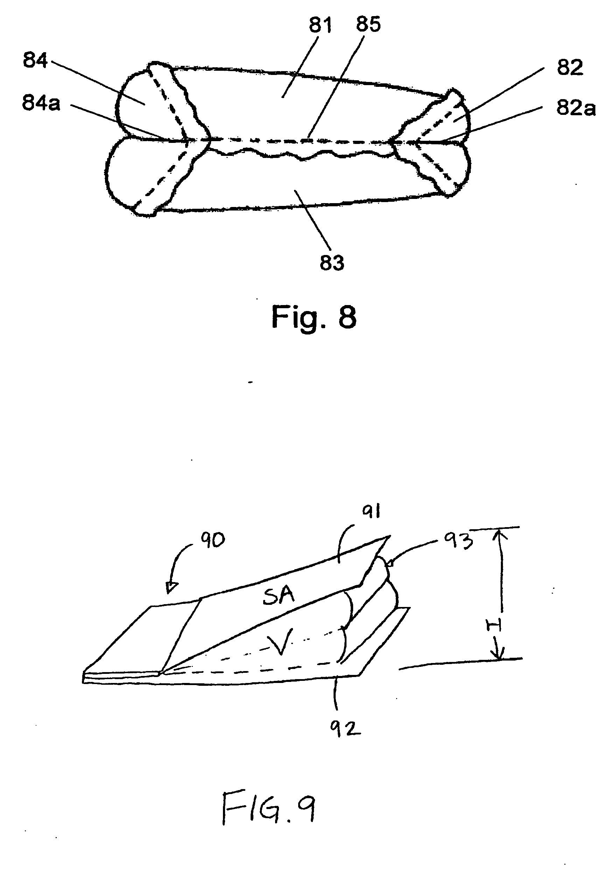

According to another embodiment of the present invention, an airbag 80 can include a plurality of gussets. For example, as shown in Figure 8, an airbag 80 can include first 81 and second 83 airbag panels attached along a seam 85. At each end of the airbag 80, a gusset comprising a folded panel 82, 84 can be sewn to the airbag 80. Folded panel 82 includes a fold 82a or crease and folded panel 84 includes a fold 84a or crease.

According to another embodiment of the present invention shown in Figure 9, the volume reduction factor of an airbag 90 can be less than one. The volume reduction factor is calculated by the volume V of the inflated chamber of the gusseted airbag 90 divided by the product of the surface area SA of the smaller of the first 91 or second 92 fabric panels in the inflatable area and the maximum distance H between the first 91 and second 92 panels at the gusset 93. According to another embodiment of the present invention, the ratio of a volume reduction factor is less than 0.8. According to another embodiment of the present invention, the ratio of a volume reduction factor is less than 0.6.

The fabric gussets 93 result in an increased operating thickness of the inflated and pressurized airbag 90 chamber without significantly increasing the chamber expansion in other dimensions. According to one embodiment of the invention, the operating thickness of an airbag 90 with applied gussets 93 being at least 10% higher compared to an airbag without gussets and with the same circumferential seam.

The effective thickness, according to an embodiment of the present invention, is increased so that an increase in volume is only possible in one space direction. Generally, all seams on the two-dimensional plane or all cuttings placed on top of each other can be sewn in the production process. The cuttings are all sewn together in a two-dimensional manner so that during inflation, parts of the fabric rise to an upright position in the third dimension. This is achieved by at least one layer that is sewn in between the two outer seams or layers that are folded in and which rise asymmetrically to an upright position when the airbag is filled.

According to an embodiment of the present invention, the seams may be siliconized or not siliconized in order to withstand higher pressure.

## Claims

1. An airbag comprising:
- a front fabric panel (11, 21) connected to a rear fabric panel (14, 24) to form a chamber therebetween;
- a gusset positioned to allow the front and rear panels (11, 21, 14, 24) to separate at a point where the front and rear panels (11, 21, 14, 24) are connected by the gusset,
- the airbag (10) further comprises two airbag panels, hereinafter referred to as second and third airbag panel (12, 22, 13, 23), the second and third airbag panels (12, 22, 13, 23) forming said gusset;
- wherein the front airbag panel (11, 21) is connected to the second airbag panel (12, 22) along a first seam (17);
- wherein the third airbag panel (13, 23) is connected to the rear airbag panel (14, 24) along a second seam (18);
- wherein the second airbag panel (12, 22) is connected to the third airbag panel (13, 23) along a third seam (19),
**characterized in that**
- the third seam (19) is farther from the periphery of the second and third airbag panels (12, 22, 13, 23) than the first and second seams (17, 18);
- the second and third airbag panels (12, 22, 13, 23) each have a cutting area or opening (15, 16); and
- said first, second and third seams (17, 18, 19) and said openings (15, 16) join the front (11, 21), second (12, 22), third (13, 23) and rear (14, 24) airbag panels together and create a chamber inside the panels (21, 22, 23, 24).

2. The airbag of claim 1,
- wherein a fourth seam line (229) joins together the front (21), second (22), third (23) and rear (24) airbag panels;
- wherein the second and third airbag panels (12, 22, 13, 23) allow the airbag (10) to expand on one side, and on the other side, the airbag (10) does not expand due to the fourth seam line (229) joining the front (11, 21), second (12, 22), third (13, 23) and rear (14, 24) airbag panels.

3. The airbag of claim 1, wherein the gusset extends along the complete distance of a circumferential seam of the chamber.

4. The airbag of claim 1, wherein the gusset extends along a portion of a circumferential seam of the chamber.

5. The airbag of claim 1, further comprising a plurality of gussets.

6. The airbag of claim 1, wherein a ratio of a volume reduction factor is less than one.

7. The airbag of claim 1, wherein a ratio of a volume reduction factor is less than 0.8.

8. The airbag of claim 1, wherein a ratio of a volume reduction factor is less than 0.6.

9. An occupant safety system, comprising: an airbag (10) according to any of the preceding claims with front and rear panels (11, 21, 14, 24) connected to form a chamber therebetween, and a gusset configured to allow the front and rear panels 11, 21, 14, 24) to separate at a point where the gusset is connected to the front and rear panels 11, 21, 14, 24); and an inflator for inflating the airbag (10).

10. The occupant safety system of claim 9, wherein the gusset comprises a flat fabric piece.

11. The occupant safety system of claim 9, wherein the gusset is sewn in between the front and rear fabric panels (11, 21, 14, 24).

12. The occupant safety system of claim 9, wherein the gusset extends along the complete distance of a circumferential seam of the chamber.

## Patentansprüche

1. Ein Airbag umfassend:
- ein vorderes Stoffpanel (11, 21) verbunden mit einem hinteren Stoffpanel (14, 24), um eine Kammer dazwischen auszubilden;
- eine Verstärkung positioniert, um eine Trennung des vorderen und hinteren Panels (11, 21, 14, 24) an einem Punkt zu ermöglichen, an dem die vorderen und hinteren Panele (11, 21, 14, 24) durch die Verstärkung verbunden sind,
- wobei der Airbag (10) des Weiteren zwei Airbagpanele umfasst, die im Folgenden als zweite und dritte Airbagpanele (12, 22, 13, 23) bezeichnet werden, wobei die zweiten und dritten Airbagpanele (12, 22, 13, 23) die Verstärkung ausbilden;
- wobei das vordere Airbagpanel (11, 21) mit dem zweiten Airbagpanel (12, 22) entlang einer ersten Naht (17) verbunden ist,
- wobei das dritte Airbagpanel (13, 23) mit dem hinteren Airbagpanel (14, 24) entlang einer zweiten Naht (18) verbunden ist;
- wobei das zweite Airbagpanel (12, 22) mit dem dritten Airbagpanel (13, 23) entlang einer dritten Naht (19) verbunden ist,
**dadurch gekennzeichnet, dass**
- die dritte Naht (19) weiter von dem Umfang des zweiten und dritten Airbagpanels (12, 22, 13, 23) entfernt ist als die erste und zweite Naht (17, 18);
- jeweils das zweite und dritte Airbagpanel (12, 22, 13, 23) einen Schneidbereich oder eine Öffnung (15, 16) aufweist; und
- die erste, zweite und dritte Naht (17, 18, 19) und die Öffnungen (15, 16) das vordere (11, 21), zweite (12, 22), dritte (13, 23) und hintere (14, 24) Airbagpanel aneinander fügen und eine Kammer innerhalb der Panele (21, 22, 23, 24) ausbilden.

2. Airbag nach Anspruch 1,
- wobei eine vierte Nahtlinie (229) das vordere (21), zweite (22), dritte (23) und hintere (24) Airbagpanel aneinander fügt;
- wobei das zweite und dritte Airbagpanel (12, 22, 13, 23) es dem Airbag (10) ermöglicht, auf einer Seite zu expandieren, und auf der anderen Seite der Airbag (10) aufgrund der vierten Nahtlinie (229), die das vordere (11, 21), zweite (12, 22), dritte (13, 23) und hintere (14, 24) Airbagpanel zusammenfügt, nicht expandiert.

3. Airbag nach Anspruch 1, wobei die Verstärkung sich entlang der kompletten Strecke der Umfangsnaht der Kammer erstreckt.

4. Airbag nach Anspruch 1, wobei die Verstärkung sich entlang eines Bereiches einer Umfangsnaht der Kammer erstreckt.

5. Airbag nach Anspruch 1, des Weiteren eine Vielzahl von Verstärkungen umfassend.

6. Airbag nach Anspruch 1, wobei ein Verhältnis eines Volumenreduktionsfaktors kleiner als 1 ist.

7. Airbag nach Anspruch 1, wobei ein Verhältnis eines Volumenreduktionsfaktors kleiner als 0,8 ist.

8. Airbag nach Anspruch 1, wobei ein Verhältnis eines Volumenreduktionsfaktors kleiner als 0,6 ist.

9. Ein Insassensicherheitssystem umfassend:
einen Airbag (10) nach einem der vorhergehenden Ansprüche mit vorderem und hinterem Panel (11, 21, 14, 24) verbunden, um eine Kammer dazwischen auszubilden, und eine Verstärkung gestaltet, um eine Trennung des vorderen und hinteren Panels (11, 21, 14, 24) an einem Punkt zu ermöglichen, an dem die Verstärkung mit dem vorderen und hinteren Panel (11, 21, 14, 24) verbunden ist; und einen Gasgenerator zum Aufblasen des Airbags (10).

10. Insassensicherheitssystem nach Anspruch 9, wobei die Verstärkung ein flaches Gewebestück umfasst.

11. Insassensicherheitssystem nach Anspruch 9, wobei die Verstärkung zwischen das vordere und hintere Stoffpanel (11, 21, 14, 24) eingenäht ist.

12. Insassensicherheitssystem nach Anspruch 9, wobei die Verstärkung sich entlang der kompletten Strecke einer Umfangsnaht der Kammer erstreckt.

## Revendications

1. Coussin de sécurité gonflable, comprenant :
- un panneau en tissu avant (11, 21) relié à un panneau en tissu arrière (14, 24) pour former une chambre entre eux ;
- un soufflet positionné pour permettre aux panneaux avant et arrière (11, 21, 14, 24) de se séparer en un point où les panneaux avant et arrière (11, 21, 14, 24) sont reliés par le soufflet,
- le coussin de sécurité gonflable (10) comprend en outre deux panneaux de coussin de sécurité gonflable, nommés ci-après deuxième et troisième panneaux de coussin de sécurité gonflable (12, 22, 13, 23), les deuxième et troisième panneaux de coussin de sécurité gonflable (12, 22, 13, 23) formant ledit soufflet ;
- dans lequel le panneau avant de coussin de sécurité gonflable (11, 21) est relié au deuxième panneau de coussin de sécurité gonflable (12, 22) le long d'une première couture (17) ;
- dans lequel le troisième panneau de coussin de sécurité gonflable (13, 23) est relié au panneau arrière de coussin de sécurité gonflable (14, 24) le long d'une deuxième couture (18) ;
- dans lequel le deuxième panneau de coussin de sécurité gonflable (12, 22) est relié au troisième panneau de coussin de sécurité gonflable (13, 23) le long d'une troisième couture (19),
**caractérisé en ce que**
- la troisième couture (19) est plus éloignée de la périphérie des deuxième et troisième panneaux de coussin de sécurité gonflable (12, 22, 13, 23) que les première et deuxième coutures (17, 18) ;
- les deuxième et troisième panneaux de coussin de sécurité gonflable (12, 22, 13, 23) ont chacun une surface de coupe une ouverture (15, 16) ; et
- lesdites première, deuxième et troisième coutures (17, 18, 19) et lesdites ouvertures (15, 16) relient ensemble le panneau avant de coussin de sécurité gonflable (11, 21), le deuxième panneau de coussin de sécurité gonflable (12, 22), le troisième panneau de coussin de sécurité gonflable (13, 23) et le panneau arrière de coussin de sécurité gonflable (14, 24) et créent une chambre à l'intérieur des panneaux (21, 22, 23, 24).

2. Coussin de sécurité gonflable selon la revendication 1,
- dans lequel un quatrième tracé de couture (229) relie ensemble le panneau avant de coussin de sécurité gonflable (21), le deuxième panneau de coussin de sécurité gonflable (22), le troisième panneau de coussin de sécurité gonflable (23) et le panneau arrière de coussin de sécurité gonflable (24) ;
- dans lequel les deuxième et troisième panneaux de coussin de sécurité gonflable (12, 22, 13, 23) permettent au coussin de sécurité gonflable (10) de s'étendre d'un côté, et de l'autre côté, le coussin de sécurité gonflable (10) ne s'étend pas en raison du quatrième tracé de couture (229) reliant le panneau avant de coussin de sécurité gonflable (11, 21), le deuxième panneau de coussin de sécurité gonflable (12, 22), le troisième panneau de coussin de sécurité gonflable (13, 23) et le panneau arrière de coussin de sécurité gonflable (14, 24).

3. Coussin de sécurité gonflable selon la revendication 1, dans lequel le soufflet s'étend sur toute la distance d'une couture périphérique de la chambre.

4. Coussin de sécurité gonflable selon la revendication 1, dans lequel le soufflet s'étend sur une portion d'une couture périphérique de la chambre.

5. Coussin de sécurité gonflable selon la revendication 1, comprenant en outre une pluralité de soufflets.

6. Coussin de sécurité gonflable selon la revendication 1, dans lequel un rapport d'un facteur de réduction de volume est inférieur à un.

7. Coussin de sécurité gonflable selon la revendication 1, dans lequel un rapport d'un facteur de réduction de volume est inférieur à 0,8.

8. Coussin de sécurité gonflable selon la revendication 1, dans lequel un rapport d'un facteur de réduction de volume est inférieur à 0,6.

9. Système de sécurité pour passager, comprenant : un coussin de sécurité gonflable (10) selon l'une quelconque des revendications précédentes muni de panneaux avant et arrière (11, 21, 14, 24) reliés pour former une chambre entre eux, et un soufflet configuré pour permettre aux panneaux avant et arrière (11, 21, 14, 24) de se séparer en un point où le soufflet est relié aux panneaux avant et arrière (11, 21, 14, 24) ; et un gonfleur pour gonfler le coussin de sécurité gonflable (10).

10. Système de sécurité pour passager selon la revendication 9, dans lequel le soufflet comprend un tissu plat.

11. Système de sécurité pour passager selon la revendication 9, dans lequel le soufflet est cousu entre les panneaux en tissu avant et arrière (11, 21, 14, 24).

12. Système de sécurité pour passager selon la revendication 9, dans lequel le soufflet s'étend sur toute la distance d'une couture périphérique de la chambre.
